# FASCICULE DE BREVET EUROPEEN

(11) **EP 2 304 262 B1**
(45) Date de publication et mention de la délivrance du brevet: **14.03.2012**
(21) Numéro de dépôt: 09784459.1
(22) Date de dépôt: 03.07.2009
(51) Int. Cl.: F16D 63/00, B60T 1/06, H02J 7/00

(54) **DISPOSITIF DE BLOCAGE DE L'ARBRE DE SORTIE D'UN MOTEUR DE VEHICULE AUTOMOBILE**
VORRICHTUNG ZUR BLOCKIERUNG DER ABTRIEBSWELLE EINES AUTOMOTORS
DEVICE FOR BLOCKING THE OUTPUT SHAFT OF THE ENGINE OF AN AUTOMOBILE

(30) Priorité: 28.07.2008 FR 0855177
(43) Date de publication de la demande: 06.04.2011
(73) Titulaire: Renault S.A.S., 92100 Boulogne-Billancourt (FR)
(72) Inventeur: VILLENEUVE, Arnaud, F-78540 Vernouillet (FR)
(86) Numéro de dépôt international: PCT/FR2009/051298
(87) Numéro de publication internationale: WO 2010/012923

(56) Documents cités:
- JP-A- 9 298 840
- JP-A- 10 100 872
- JP-A- 10 175 524
- JP-A- 2000 291 797
- JP-U- 1 087 068
- US-A- 5 807 205

## Description

### DOMAINE DE L'INVENTION

La présente invention a trait au domaine automobile et plus particulièrement à l'immobilisation d'un véhicule par blocage de l'arbre de sortie du moteur équipant celui-ci.

### ETAT DE LA TECHNIQUE

Le blocage de l'arbre de sortie d'un moteur thermique de véhicule automobile est usuellement utilisé dans une transmission automatique pour immobiliser le véhicule. Pour ce faire, le conducteur engage une position dite « frein de parking » de la boite automatique. Un doigt s'engage alors entre deux dents d'une roue dentée, dite « roue de parking », montée coaxialement sur l'arbre de sortie afin d'immobiliser celui-ci.

Pour des raisons de sécurité, l'engagement de ce doigt doit pouvoir se réaliser lorsque le véhicule roule à une vitesse non nulle proche de 5 km/h. Afin qu'un tel engagement à vitesse non nulle soit possible, la largeur du doigt est sensiblement inférieure à celle des espaces entre deux dents de la roue de parking. Ainsi, une fois le doigt engagé dans la roue de parking, il existe un jeu circonférentiel rendant libre la roue, et donc l'axe de sortie du moteur, de tourner de quelques degrés.

Or, certaines applications nécessitent pour des raisons de sécurité une immobilisation complète de l'arbre de sortie du moteur sans possibilité pour celui-ci d'effectuer une rotation lorsque le doigt est engagé.

Par exemple, dans le cadre de véhicule électrique dont le moteur peut être du type synchrone ou asynchrone, les inventeurs ont découvert qu'il est possible de recharger rapidement la batterie d'accumulateurs du véhicule en alimentant électriquement directement les enroulements du stator du moteur, qui jouent alors le rôle de composants inductifs. Le stator est en effet connecté à la sortie d'un onduleur générant une alimentation électrique alternative du stator à partir de la tension continue délivrée en entrée par la batterie. Comme cela est connu en soi, un onduleur est un dispositif réversible qui délivre sur son entrée une tension redressée lorsque sa sortie est alimentée en tension alternative. En alimentant électriquement les enroulements statoriques, une recharge de la batterie via l'onduleur est alors réalisée.

Toutefois, pour mettre en oeuvre une telle recharge de la batterie, il est nécessaire de bloquer complètement le rotor pour immobiliser le véhicule. En effet, le passage d'un courant dans les enroulements statoriques génère un couple moteur puisque le rotor tend à aligner son champ magnétique sur le champ magnétique du stator provoqué par le passage du courant (que ce soit par des phénomènes de réluctance dans un rotor de moteur synchrone à excitation séparée dont l'alimentation du rotor a été coupée, par la simple présence des aimants permanents sur le rotor d'un moteur synchrone classique à aimants permanents, ou encore par les courants induits dans le rotor dans le cas d'un moteur asynchrone). Or, en raison du coefficient multiplicateur de la chaîne de transmission, le couple moteur ramené aux roues du véhicule est important. De fait, le moindre mouvement du rotor aura pour conséquence d'engendrer un couple aux roues dans le même sens faisant se déplacer le véhicule. Dans des cas extrêmes, un emballement du moteur électrique par accrochage des champs magnétiques rotoriques et statoriques peut provoquer le démarrage intempestif du véhicule.

Toutefois, le blocage du rotor, qui forme arbre de sortie du moteur, au moyen d'un doigt et d'une roue de parking tels que décrits précédemment, connus par example de US 5 807 205 ou de JP 01 087068 U, ne suffit pas à assurer une sécurité optimale en raison du jeu circonférentiel existant nécessaire au bon fonctionnement du frein de parking. En effet, quelque soit le type d'alimentation électrique des enroulements statoriques, il existe une composante alternative dans l'alimentation qui a pour effet de provoquer un mouvement de va-et-vient du rotor, chaque phase de ce va-et-vient se terminant par une mise en butée violente du doigt sur le flanc d'une dent de la roue de parking. Non seulement ces mises en butée violente fragilisent les dents de la roue de parking et le doigt, impliquant au bout d'un moment leur destruction, mais en plus ces phénomènes de vibration se propagent tout au long de la chaine de transmission, fragilisant également celle-ci, et induisant un mouvement de va-et-vient du véhicule.

### EXPOSE DE L'INVENTION

Le but de la présente invention est de résoudre le problème susmentionné en proposant un système de blocage de l'arbre de sortie d'un moteur de véhicule automobile assurant un blocage complet de cet arbre.

A cet effet, l'invention a pour objet un système de blocage de l'arbre de sortie d'un moteur de véhicule automobile, du type comportant une roue dentée montée coaxialement sur ledit arbre et un premier doigt mobile entre une position de libération de l'arbre et une position de blocage de celui-ci dans laquelle le premier doigt est engagé dans un espace formé entre deux dents de la roue.

Selon l'invention, le système comporte des moyens d'alignement aptes à aligner un espace entre deux dents de la roue avec le premier doigt mobile, et le premier doigt mobile est conçu pour s'engager sensiblement sans jeu circonférentiel dans ledit espace.

En d'autres termes, le doigt est conçu pour s'insérer entre deux dents de la roue de sorte que ses flancs appuient sur les flancs des dents. Ainsi, le rotor ne dispose d'aucun degré de liberté en rotation. Notamment, dans le cadre d'une recharge de batterie telle que décrite précédemment, le mouvement de va-et-vient est empêché.

On comprendra bien évidement que l'expression « sans jeu circonférentiel » signifie l'absence de jeu circonférentiel fonctionnel dans la mesure où il existe toujours un jeu circonférentiel minime en raison des tolérances de fabrication des pièces mécaniques.

Selon l'invention, les moyens d'alignement comportent un second doigt mobile entre une position de libération de l'arbre et une position de blocage de celui-ci dans laquelle le second doigt est engagé dans un espace formé entre deux dents de la roue, le second doigt mobile étant conçu pour s'engager avec un fort jeu circonférentiel dans ledit espace.

En d'autres termes, il est possible d'adjoindre au premier doigt un second doigt analogue au doigt classique assurant dans les véhicules à transmission automatique la fonction de frein de parking. Ce second doigt est alors principalement utilisé dans le cadre de l'invention en tant que moyen de préalignement du premier doigt mais peut toutefois conserver sa fonction première de frein de parking.

Par « fort jeu circonférentiel », on entend ici un jeu dont l'amplitude permet un préalignement de l'arbre avec le premier doigt pour une vitesse non nulle du véhicule de l'ordre de 5 km/h.

Selon l'invention, le système comporte un poussoir apte à effectuer un mouvement de translation, et le premier doigt est apte à effectuer un mouvement de rotation autour d'un axe de rotation, le premier doigt comportant une première formant formant came sur laquelle ledit poussoir est apte à pousser. Plus particulièrement, le second doigt est apte à effectuer un mouvement de rotation autour de l'axe de rotation et comporte une seconde surface formant came sur laquelle ledit poussoir est apte à pousser, les surfaces formant came du premier et du second doigt étant agencées de sorte que la surface formant came du premier doigt est apte à être engagée une fois le second doigt engagé dans un espace entre deux dents de la roue.

En d'autres termes, le premier et le second doigt s'engagent successivement entre deux dents de la roue, permettant ainsi un blocage préliminaire du l'arbre de sortie du moteur, y compris lorsque le véhicule est en mouvement, suivit d'un blocage complet de l'arbre.

De préférence, l'un parmi le premier et le second doigt comporte un pion apte à s'engager dans une rainure en arc de cercle de l'autre doigt. L'engagement successif des doigts est ainsi renforcé et le désengagement d'un doigt induit le désengagement de l'autre doigt.

De préférence, le système comporte un anneau en élastomère entre l'axe de rotation du premier doigt et le premier doigt de manière à filtrer les vibrations générées par les réactions sur le rotor.

Selon un mode de réalisation particulier de l'invention, les moyens d'alignement comprennent des moyens de commande aptes à commander la rotation lente de l'arbre.

En d'autres termes, l'arbre est tourné lentement afin de s'assurer un engagement du premier doigt sans jeu circonférentiel entre deux dents de la roue.

La présente invention trouve avantageusement application dans le cadre d'un moteur électrique du type synchrone dont le rotor forme l'axe de sortie de celui-ci, notamment lorsqu'il s'agit de bloquer le rotor pour des raisons de recharge de la batterie d'accumulateurs du véhicule par alimentation des enroulements statoriques.

### BREVE DESCRIPTION DES FIGURES

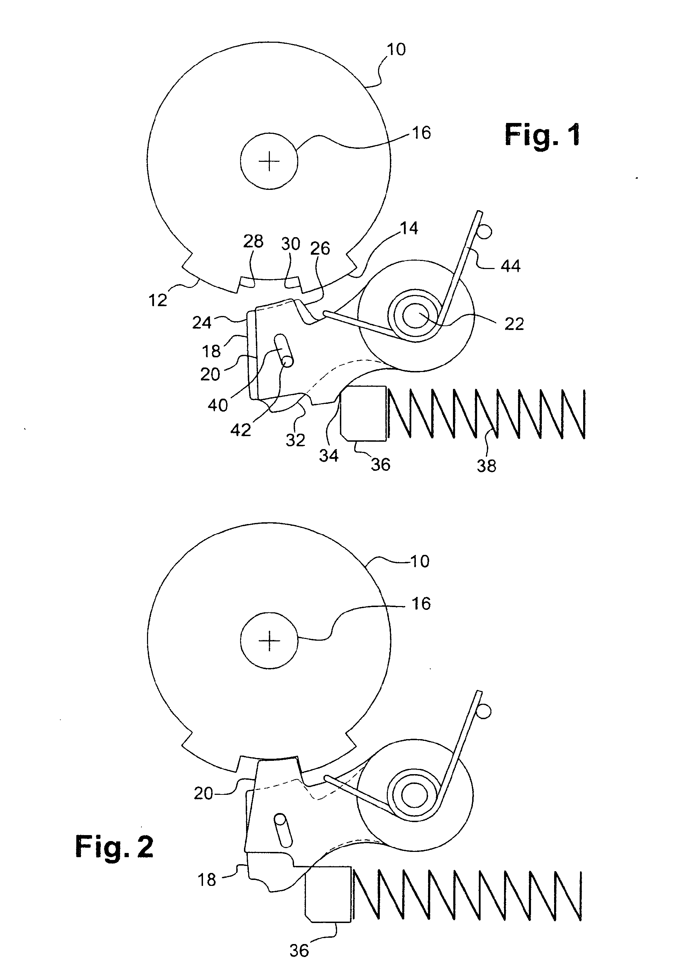

La présente invention sera mieux comprise à la lecture de la description qui va suivre, donnée uniquement à titre d'exemple, et faite en relation avec les figures 1 à 5 annexées, dans lesquelles des références identiques désignent des éléments identiques ou analogues, ces figures illustrant schématiquement un système selon l'invention dans différentes positions de fonctionnement.

### DESCRIPTION DETAILLEE DE L'INVENTION

Sur les figures 1 à 5, une roue dentée 10, dont seulement deux dents 12, 14 sont illustrées, est montée coaxialement sur l'arbre de sortie 16 d'un moteur d'un véhicule automobile, par exemple un moteur électrique du type synchrone dont le rotor forme l'arbre de sortie 16.

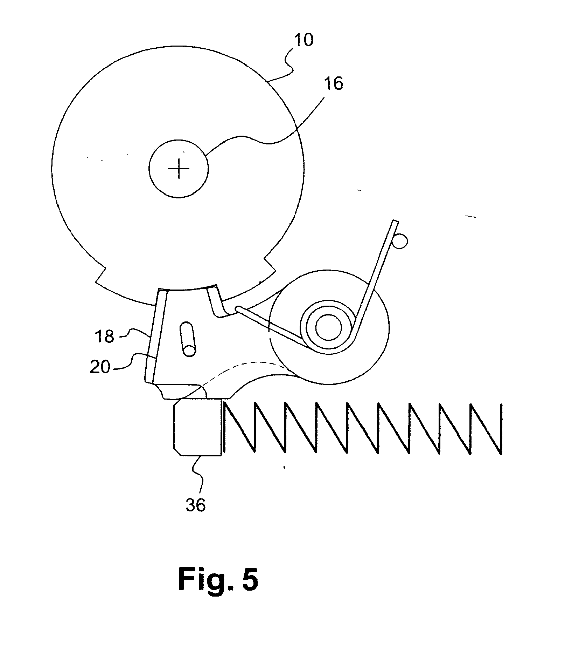

Des premier et second doigts 18, 20 sont montés en rotation sur le bâti du moteur autour d'un même axe 22. L'extrémité du premier doigt 18 présente sensiblement les mêmes formes et dimensions que l'espace entre les dents 12, 14 de la roue 10 afin de s'engager dans cet espace sensiblement sans jeu circonférentiel, les flancs 24, 26 de l'extrémité du doigt 18 étant alors au contact des flancs 28, 30 des dents 12, 14 (voir figure 5).

L'extrémité du second doigt 18 présente quant à elle des dimensions sensiblement inférieures à celle de l'espace entre les dents 12, 14 afin de pouvoir s'engager dans ledit espace y compris lorsque le véhicule roule à une vitesse d'environ 5 km/h.

Chacun des premier et second doigts 18, 20 comporte par ailleurs une surface formant came 32, 34 sur laquelle un poussoir 36, animé d'un mouvement de translation au moyen d'un ressort de poussée 38, glisse pour engager ou désengager les doigts 18, 20 de la roue 10.

Les surfaces formant came 32, 34 sont conçues de manière à ce que la surface formant came 32 du premier doigt vienne au contact du poussoir 36 une fois le second doigt 20 engagé entre les dents 12, 14 (voir figure 2).

De manière avantageuse, le premier doigt 20 comporte une rainure en arc de cercle 40 dans laquelle un pion 42 du second doigt est logé, la rainure 40 étant agencée pour qu'une fois le pion 42 en butée haute dans la rainure 40, le début de la surface formant came 32 du premier doigt soit au contact avec le poussoir 36 (voir figure 2). Le pion 42 force ainsi l'engagement du second doigt avant l'engagement du premier doigt entre les dents 12, 14 de la roue 10 et oblige à un rappel simultané des deux doigts 18, 20 lors de leur désengagement de la roue 10.

Un ressort de rappel 44 est par ailleurs prévu et écarte simultanément des deux doigts 18, 20 de la roue 10 lorsque le poussoir 26 se retire afin de désengager les doigts 18, 20 de la roue 10.

Enfin, des moyens de commande de la rotation de l'arbre de sortie du moteur 16, et donc de la roue 10, sont prévus pour mettre en rotation lente celui-ci, comme cela sera expliqué plus en détail par la suite.

L'engagement des doigts 18, 20 entre les dents 12, 14 est alors réalisé de la manière suivante.

Depuis une position dans laquelle les doigts sont désengagés de la roue 10 (figure 1), le poussoir 36 est armé en comprimant le ressort de poussée 38. Le poussoir 38 agit alors sur la surface formant came 34 du second doigt 20 qui pivote alors vers la roue 10.

Dans le cas où le second doigt 20 vient s'appuyer sur la face externe d'une dent 12, 14, un faible mouvement du véhicule a pour conséquence de faire tourner la roue 10, permettant ainsi au second doigt 20, qui présente un fort jeu circonférentiel, de s'engager entre les dents successives 12, 14 du fait de la poussée continue exercée par le poussoir 36.

Une fois l'engagement du second doigt 20 entre deux dents 12, 14 de la roue 10 effectif, un pré-alignement du premier doigt 18 avec l'espace formé entre les dents 12, 14 est ainsi réalisé. Le poussoir 36 vient alors s'appuyer sur la surface formant came 32 du premier doigt et le pion 42 est en butée haute dans la rainure 40. Le poussoir 36 continue alors sa poussée sur la surface formant came 32 (figure 2).

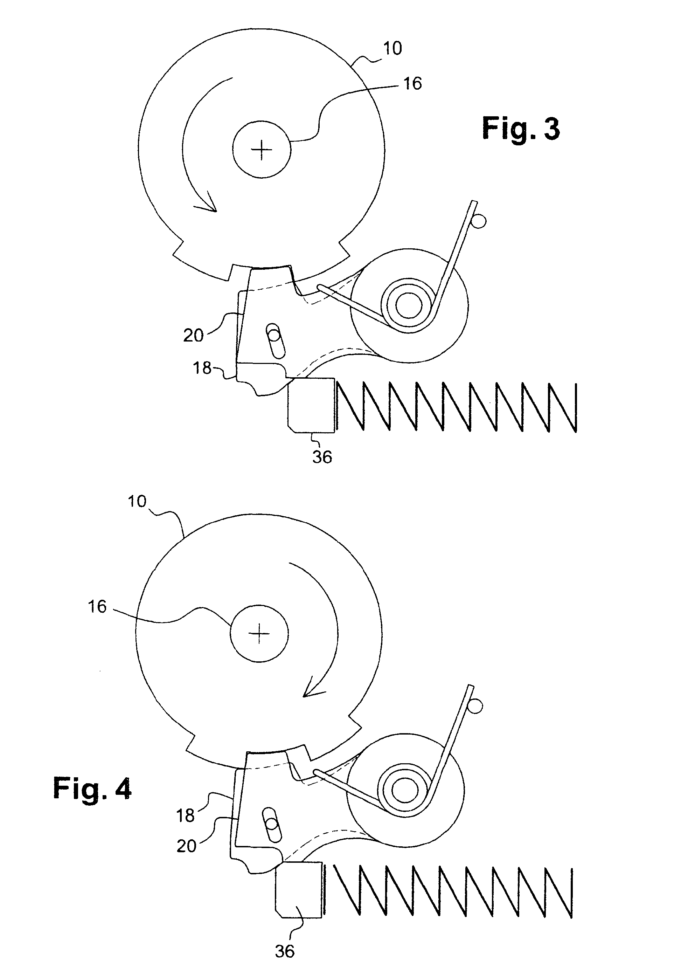

Dans cette position, la probabilité de voir le premier doigt 18 venir au contact de la surface externe d'une dent est élevée (figures 3 et 4). Une recherche pilotée de l'engagement de premier doigt 18 est alors mise en oeuvre en mettant en rotation lente l'arbre de sortie 16, de préférence avant une charge éventuelle de la batterie par alimentation du stator.

Par exemple, lorsque l'arbre de sortie 16 du moteur est constitué du rotor d'un moteur électrique, un courant pilotant la rotation lente du rotor est alors mis en oeuvre. L'arbre de sortie 16 s'aligne alors avec le premier doigt 18, qui s'engage alors entre les dents 12, 14 en raison de la poussée du poussoir 36 (figure 5). L'engagement est avantageusement détecté au moyen d'un capteur de courant statorique par exemple. En effet, une fois le premier doigt 18 engagé, celui-ci s'appuie sur les flancs des dents 12, 14 et réalise un effet de coin favorisant l'absence de jeu circonférentiel. De part la poussée continue du poussoir 36, le rotor 16 est alors complètement bloqué, ce qui se traduit par un pic de courant détectable au moyen dudit capteur.

En variante, lors de la charge de la batterie d'accumulateurs par alimentation du stator du moteur électrique, un mouvement de va-et-vient du rotor survient. Le pré-alignement préliminaire au moyen du second doigt 20 permet alors d'engager en un seul va-et-vient le premier doigt 18 entre les dents 12, 14.

En variante, lorsque le couple appliqué au rotor est unidirectionnel, il est possible de concevoir le second doigt 20 pour qu'une fois en butée sur une dent, une rotation du rotor dans le sens du couple engage le premier doigt 18, comme cela est par exemple illustré à la figure 4.

Bien qu'il ait été décrit une application au blocage d'un rotor formant arbre de sortie d'un moteur électrique de véhicule automobile, la présente invention trouve avantageusement application dans le blocage d'un arbre de sortie d'un moteur thermique. Dans ce type d'application, un simple déplacement du véhicule permet l'engagement du premier doigt lorsque le second doigt est engagé.

Une autre application d'un tel système peut être dirigée vers tout arbre de transmission utilisant des trains épicycloïdaux pour la réalisation de rapports de réductions discrets (boîtes de vitesses automatiques) ou infiniment variable.

La présente invention peut en outre être améliorée par l'adjonction d'un anneau en élastomère entre l'axe 22 et le premier doigt 18 destiné à filtrer les éventuelles vibrations générées par les réactions sur le rotor.

## Revendications

1. Système de blocage de l'arbre de sortie (16) d'un moteur de véhicule automobile, du type comportant une roue dentée (10) montée coaxialement sur ledit arbre (16) et un premier doigt mobile (18) entre une position de libération de l'arbre (16) et une position de blocage de celui-ci dans laquelle le premier doigt (18) est engagé dans un espace formé entre deux dents (12, 14) de la roue, du type qui comporte des moyens (20) d'alignement aptes à aligner un espace entre deux dents (12, 14) de la roue (10) avec le premier doigt mobile, le premier doigt mobile (18) étant conçu pour s'engager sensiblement sans jeu circonférentiel dans ledit espace, du type dans lequel les moyens d'alignement comportent un second doigt (20) mobile entre une position de libération de l'arbre (16) et une position de blocage de celui-ci dans laquelle le second doigt (20) est engagé dans un espace formé entre deux dents (12, 14) de la roue (10), le second doigt mobile (20) étant conçu pour s'engager avec un fort jeu circonférentiel dans ledit espace, du type dans lequel le système comporte un poussoir (36) apte à effectuer un mouvement de translation, le premier doigt (18) étant apte à effectuer un mouvement de rotation autour d'un axe de rotation (22), et comportant une première surface formant came (32) sur laquelle ledit poussoir (36) est apte à pousser, **caractérisé en ce que** le second doigt (20) est apte à effectuer un mouvement de rotation autour de l'axe de rotation (22) et comporte une seconde surface formant came (34) sur laquelle ledit poussoir (36) est apte à pousser, les surfaces formant came (32, 34) du premier et du second doigt (18, 20) étant agencées de sorte que la première surface formant came (32) du premier doigt (18) est apte à être engagée par le poussoir une fois le second doigt (20) engagé dans un espace entre deux dents (12, 14) de la roue (10).

2. Système selon la revendication 1, ***caractérisé* en ce que** l'un parmi le premier et le second doigt (18, 20) comporte un pion (42) apte à s'engager dans une rainure en arc de cercle (40) de l'autre doigt.

3. Système selon l'une des quelconque des revendications précédentes, ***caractérisé* en ce qu'**il comporte un anneau en élastomère entre l'axe de rotation (22) et le premier doigt (18).

4. Système selon l'une quelconque des revendications précédentes, ***caractérisé* en ce que** les moyens d'alignement comprennent des moyens de commande aptes à commander la rotation lente de l'arbre.

5. Système selon l'une quelconque des revendications précédentes, ***caractérisé* en ce que** le moteur est un moteur électrique du type synchrone dont le rotor forme l'axe de sortie de celui-ci.

6. Système selon la revendication 5, ***caractérisé* en ce que** le stator du moteur électrique est apte à être alimenté électriquement pour recharger, au travers d'un redresseur, une batterie d'accumulateurs embarquée dans le véhicule.

## Claims

1. System for locking the output shaft (16) of a motor of a motor vehicle, of the type comprising a gearwheel (10) mounted coaxially on said shaft (16) and a first movable finger (18) that can move between a position of releasing the shaft (16) and a position of locking the latter in which the first finger (18) is engaged in a space formed between two teeth (12, 14) of the gearwheel, of the type which comprises alignment means (20) able to align a space between two teeth (12, 14) of the gearwheel (10) with the first movable finger, the first movable finger (18) being designed to engage substantially without circumferential clearance in said space, of the type in which the alignment means comprise a second finger (20) that can move between a position of releasing the shaft (16) and a position of locking the latter in which the second finger (20) is engaged in a space formed between two teeth (12, 14) of the gearwheel (10), the second movable finger (20) being designed to engage with a large circumferential clearance in said space, of the type in which the system comprises a button (36) able to make a translational movement, the first finger (18) being able to make a rotary movement about a rotation spindle (22), and comprising a first surface forming a cam (32) on which said button (36) is able to push, **characterized in that** the second finger (20) is able to make a rotary movement about the rotation spindle (22) and comprises a second surface forming a cam (34) on which said button (36) is able to push, the surfaces forming a cam (32, 34) of the first and of the second finger (18, 20) being arranged so that the first surface forming a cam (32) of the first finger (18) is able to be engaged by the button once the second finger (20) is engaged in a space between two teeth (12, 14) of the gearwheel (10).

2. System according to Claim 1, **characterized in that** one amongst the first and the second finger (18, 20) comprises a pin (42) able to engage in a circularly arcuate groove (40) of the other finger.

3. System according to any one of the preceding claims, **characterized in that** it comprises an elastomer ring between the rotation spindle (22) and the first finger (18).

4. System according to any one of the preceding claims, **characterized in that** the alignment means comprise control means able to control the slow rotation of the shaft.

5. System according to any one of the preceding claims, **characterized in that** the motor is an electric motor of the synchronous type the rotor of which forms the output spindle of the latter.

6. System according to Claim 5, **characterized in that** the stator of the electric motor is able to be powered electrically in order to recharge, through a rectifier, an onboard array of accumulators in the vehicle.

## Patentansprüche

1. Blockiersystem der Abtriebswelle (16) eines Kraftfahrzeugmotors von der Art, die ein Zahnrad (10), das koaxial auf die Welle (16) montiert ist, und einen ersten Finger (18) aufweist, der zwischen einer Freigabestellung der Welle (16) und einer Blockierstellung der Welle beweglich ist, wobei der erste Finger (18) in einen zwischen zwei Zähnen (12, 14) des Rads geformten Raum eingerückt wird, von der Art, die Ausrichtungseinrichtungen (20) aufweist, die einen Raum zwischen zwei Zähnen (12, 14) des Rads (10) mit dem ersten beweglichen Finger fluchtend ausrichten können, wobei der erste bewegliche Finger (18) konzipiert ist, um im Wesentlichen ohne Umfangsspiel in den Raum einzurücken, von der Art, bei der die Ausrichtungseinrichtungen einen zweiten Finger (20) aufweisen, der zwischen einer Freigabestellung der Welle (16) und einer Blockierstellung der Welle beweglich ist, wobei der zweite Finger (20) in einen zwischen zwei Zähnen (12, 14) des Rads (10) geformten Raum eingerückt wird, wobei der zweite bewegliche Finger (20) konzipiert ist, um mit einem breiten Umfangsspiel in den Raum einzurücken, von der Art, bei der das System einen Schieber (36) aufweist, der eine Translationsbewegung ausführen kann, wobei der erste Finger (18) eine Drehbewegung um eine Drehachse (22) ausführen kann und eine erste, eine Nocke (32) bildende Fläche aufweist, auf die der Schieber (36) drücken kann,
**dadurch gekennzeichnet, dass** der zweite Finger (20) eine Drehbewegung um die Drehachse (22) ausführen kann und eine zweite eine Nocke (34) bildende Fläche aufweist, auf die der Schieber (36) drücken kann, wobei die eine Nocke bildenden Flächen (32, 34) des ersten und des zweiten Fingers (18, 20) so angeordnet sind, dass der Schieber auf die erste eine Nocke bildende Fläche (32) des ersten Fingers (18) einrücken kann, wenn der zweite Finger (20) in einen Raum zwischen zwei Zähnen (12, 14) des Rads (10) eingerückt ist.

2. System nach Anspruch 1, **dadurch gekennzeichnet, dass** einer von dem ersten und dem zweiten Finger (18, 20) einen Zapfen (42) aufweist, der sich in eine Kreisbogennut (40) des anderen Fingers einfügen kann.

3. System nach einem der vorhergehenden Ansprüche, **dadurch gekennzeichnet, dass** es einen Elastomerring zwischen der Drehachse (22) und dem ersten Finger (18) aufweist.

4. System nach einem der vorhergehenden Ansprüche, **dadurch gekennzeichnet, dass** die Ausrichtungseinrichtungen Steuereinrichtungen enthalten, die die langsame Drehung der Welle steuern können.

5. System nach einem der vorhergehenden Ansprüche, **dadurch gekennzeichnet, dass** der Motor ein Elektromotor vom Synchrontyp ist, dessen Rotor dessen Abtriebsachse bildet.

6. System nach Anspruch 5, **dadurch gekennzeichnet, dass** der Stator des Elektromotors elektrisch gespeist werden kann, um über einen Gleichrichter eine Akkumulatorenbatterie aufzuladen, die sich im Fahrzeug befindet.
